# EUROPEAN PATENT SPECIFICATION

(11) **EP 2 301 397 B1**
(45) Date of publication and mention of the grant of the patent: **19.09.2012**
(21) Application number: 09171637.3
(22) Date of filing: 29.09.2009
(51) Int. Cl.: A47J 37/06, A47J 37/07

(54) **Flame tamers and arrangement thereof for barbeque grills**
Flammenbegrenzer und deren Anordnung in Bratrosten
Réducteur de flammes et agencement associé pour les grills de barbecue

(43) Date of publication of application: 30.03.2011
(73) Proprietor: Winners Products Engineering Ltd., Causeway Bay Hong Kong (CN)
(72) Inventor: Hong, David, Hong Kong (CN)
(74) Representative: 2K Patentanwälte Blasberg Kewitz & Reichel

(56) References cited:
- DE-A1- 4 236 773
- DE-U1- 9 205 776
- US-A- 2 884 849
- US-A- 4 446 776
- US-A- 5 617 778

## Description

The present invention relates to a design of flame tamer for use in a barbeque burner box and more particularly to flame tamers that have protruding openings for guiding the heat energy from heat sources toward particular directions so that the heat energy can be evenly distributed to enhance the cooking efficiency. The invention relates also to ways of arrangement of the flame tamers in the barbeque burner box.

A known flame tamer for a barbeque burner box is to be bridged on a barbeque burner box above a heat source. This design of flame tamer has a double-beveled configuration. Small holes may be made on the flame tamer for allowing upward hot air to pass. However, this design of flame tamer cannot distribute heat energy evenly throughout the whole area of the barbeque cooking surface. During cooking, there is a temperature difference between the hot spot around the center of the barbeque cooking surface and the cold spot around the border of the barbeque grill. This temperature difference results in low cooking efficiency and waste of fuel energy, and the food tends to be overcooked or undercooked.

US Pat. No. 6332395 teaches the use of a board in a barbeque burner box above a heat source to enhance heat distribution. However, this arrangement cannot evenly distribute heat energy throughout the whole cooking area. US Pat. No. 5617778 teaches the application of apertures to guide heat source. This measure still cannot achieve even distribution of heat source. US Pat. No. 6187359 teaches the use of a resistant metal plate for placing over the burners. The plate has a series of louvered openings which allow heat to rise from the barbeque flames while blocking the flames.

US 4 446 776 discloses is a heating appliance comprising a first and second section, the first section having a top surface supported by side walls via an interconnecting conical transition section. The top surface is formed with a peripherally extending raised rim adjacent a plurality of apertures arranged in groups wherein adjacent groups are separated by a spacing having a louvered vent therein. A second raised rim separates a second group of louvered vents which are radially aligned with the spacing between adjacent apertures within each group of apertures. Air pockets in the surface underside are aligned with the raised rims. A cover or second section having a plurality of openings is formed with a declined extending lip for positioning on the conical transition section; US 5 617 778 discloses a gas barbecue having a rectangular body, gas control means, a cooking grill, and a burner assembly. The burner assembly includes an elongate tube burner and a generally L-shaped tube burner having a primary tube member and a secondary tube member intersecting the primary tube member thereby forming the general L shape. The free end of the secondary tube member is positioned in close proximity to the elongate tube burner such that the ignition of the elongate tube burner causes cross-ignition of the L-shaped tube burner when gas is supplied thereto.

US 2 884 849 discloses a grill for cooking food comprising a body of generally rectangular configuration formed of sheet material having a main portion formed with longitudinally extending corrugations providing upwardly opening grooves and with down-turned sides whose lower marginal portions are in-turned to form with said main portion inwardly opening channels, said sides being of greater height at one end of the body than at the other end thereof so that the main portion will be disposed in a sloping position from end to end when the body is supported with said in-turned portions resting on a horizontally positioned support, said grooves being open at their lower ends to permit liquid to flow off of said main portion along the grooves when the body is so upported, said main portion having openings in the sides of said grooves above the bottoms of the grooves and a liquid receiving and rigidifying member removably supported in said channels and extending beyond the lower ends of said grooves in position to receive liquid from the grooves; said member having a portion positioned for engagement with said corrugations beneath the bottoms of said grooves along the lower end of said main portion to hold the same against flexing.
DE G9205776 discloses a folded flame tamer for a grill.
DE 4236773 discloses a bended flame tamer having a cross section shape of a wave with openings in the slopes.

Because conventional designs cannot guide heat source to be evenly distributed over the whole area of the barbeque cooking surface, the temperature around the center area of the barbeque cooking surface will be relatively higher than the border area of the barbeque cooking surface, resulting in low cooking efficiency and waste of fuel gas.

The present invention has been accomplished under the circumstances in view. It is the object of the present invention to provide a flame tamer for bridging in a barbeque burner box in a barbeque grill set to distribute heat energy evenly over the barbeque cooking surface so that the food can be cooked evenly and efficiently, thus saving much energy consumption.

To achieve this object of the present invention, a flame tamer for use in a barbeque burner box is to be bridged on two opposite peripheral walls, namely, the front and rear walls of the barbeque burner box, having at least one protruding opening for guiding the hot air from the heat source in the barbeque burner box toward at least one of the peripheral walls of the barbeque burner box so that the food can be cooked evenly and efficiently on the barbeque cooking surface.

In one application example, a left flame tamer, a right flame tamer and at least one middle flame tamer are bridged on the front wall and rear wall of the barbeque burner box above the heat sources. The left flame tamer is disposed close to the left sidewall of the barbeque burner box, having at least one first protruding opening extending in a direction toward the left sidewall of the barbeque burner box and at least one second protruding opening extending in a direction toward the front wall of the barbeque burner box. The right flame tamer is disposed close to the right sidewall of the barbeque burner box, having at least one first protruding opening extending in a direction toward the right sidewall of the barbeque burner box and at least one second protruding opening extending in a direction toward the front wall of the barbeque burner box. The at least one middle flame tamer is set between the left flame tamer and the right flame tamer. Each middle flame tamer has at least one first protruding opening disposed at one end thereof and extending in a direction toward the front wall of the barbeque burner box.
FIG. 1 is a perspective view of a flame tamer in accordance with a first embodiment of the present invention.
FIG. 2 is a sectional view taken along line A-A of FIG. 1.
FIG. 3 is a perspective view of a flame tamer in accordance with a second embodiment of the present invention.
FIG. 4 is a sectional view taken along line B-B of FIG. 3.
FIG. 5 is a perspective view of a flame tamer in accordance with a third embodiment of the present invention.
FIG. 6 is a sectional view taken along line C-C of FIG. 5.
FIG. 7 is a top view of the present invention, showing flame tamers of the first, second and third embodiments arranged on a barbeque burner box.
FIG. 8 is a sectional view taken along line D-D of FIG. 7.
FIG. 9 is schematic sectional assembly of the present invention, showing the flame tamers bridged on the barbeque burner box above the heat sources.

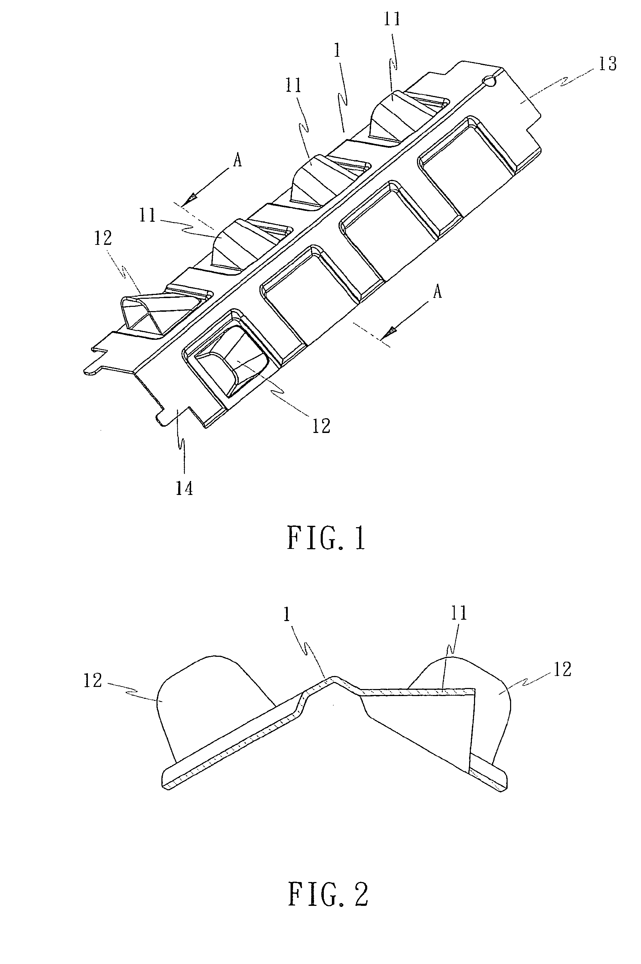

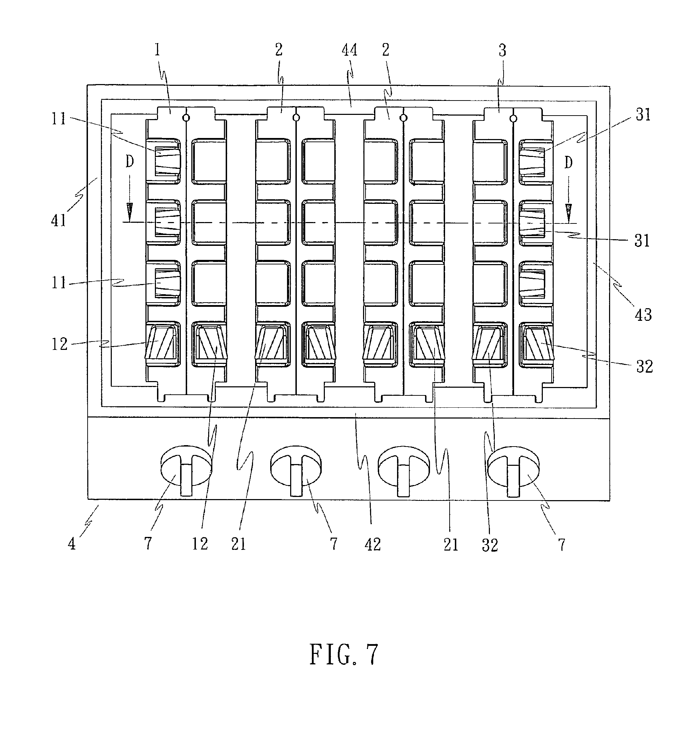

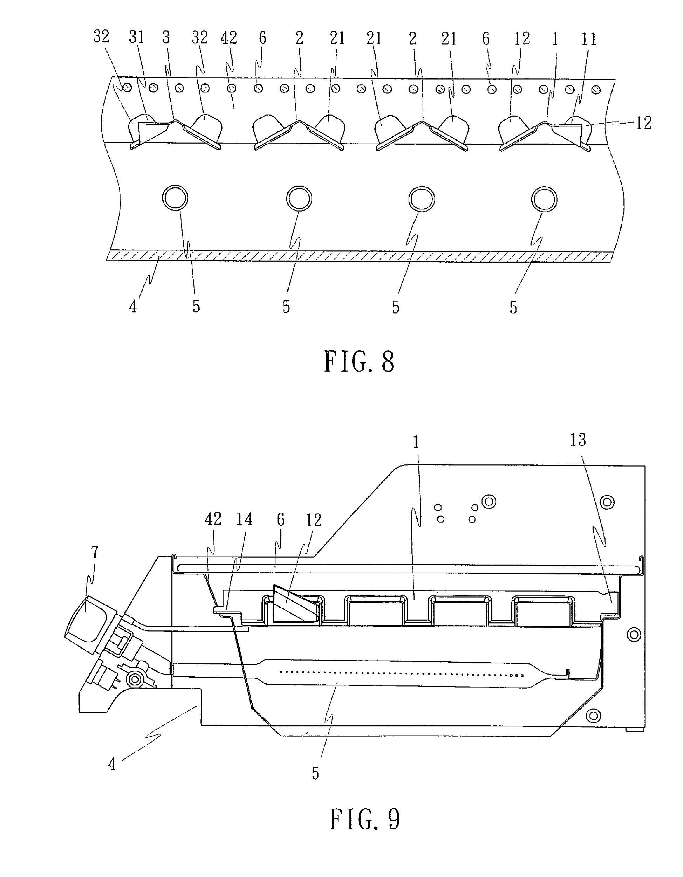

Referring to FIGS. 1-6, first, second and third flame tamers 1,2,3 constructed according to the first, second and third embodiments of the present invention are shown. As shown in FIG. 7, a barbeque burner box 4 of a barbeque grill set has four peripheral walls 41, 42, 43 and 44. The flame tamers 1, 2, 3 commonly have at least one protruding opening facing one of the peripheral walls 41, 42, 43 or 44 of the barbeque burner box 4 (see FIG. 7) for guiding the upward flow of hot air from the heat sources 5 (see FIG, 8 and FIG. 9) toward the cold spot of the barbeque burner box 4 to rapidly and evenly distribute the thermal energy over the whole area of the barbeque grill 6 to cook the food on the barbeque grill 6, thereby saving energy consumption and preventing the food from being unevenly cooked.

Referring to FIG. 7 and FIGS. 1 and 2 again, the first flame tamer 1 in accordance with the first embodiment of the present invention is supported between two opposite peripheral walls, namely, the front wall 42 and the rear wall 44 of the barbeque burner box 4 near one side wall 41 (the left side of the barbeque burner box 4), having at least one, for example three, first protruding openings 11 arranged in line and extending in a direction toward the left side wall 41 and at least one, for example two, second protruding openings 12 extending in a direction toward the front wall 42.

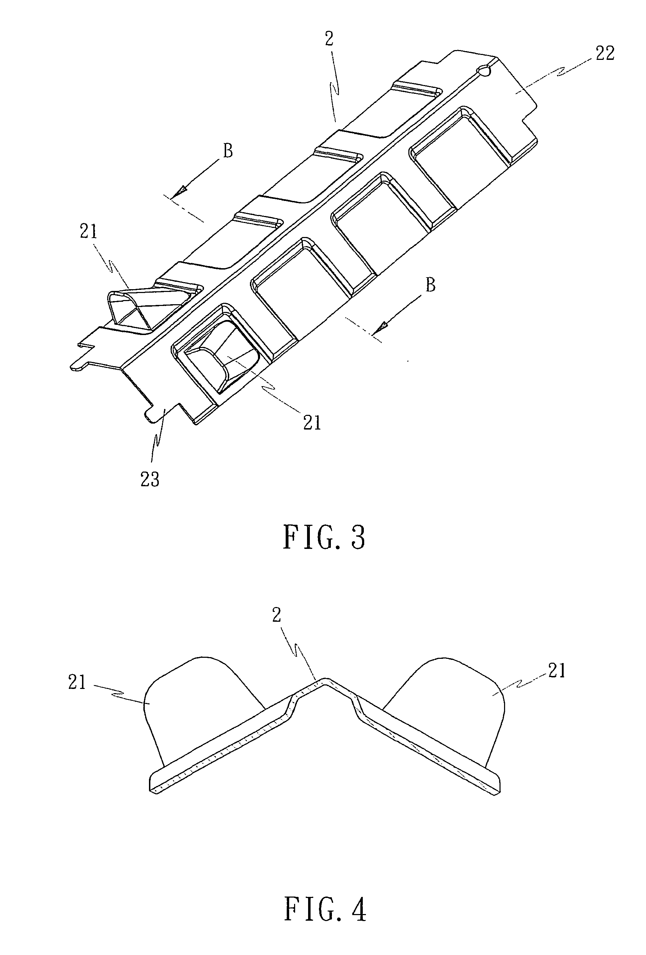

Referring to FIG. 3, FIG. 4 and FIG. 7 again, at least one second flame tamer 2 in accordance with the second embodiment of the present invention is supported between the front wall 42 and the rear wall 44 of the barbeque burner box 4 in the middle, having at least one, for example two, protruding openings 21 extending in a direction toward the front wall 42. The number of the second flame tamer 2 to be bridged on the barbeque burner box 4 is determined according to the size of the barbeque burner box 4. According to the application example shown in FIG. 7, two pieces of second flame tamers 2 are bridged on the barbeque burner box 4 in the middle.

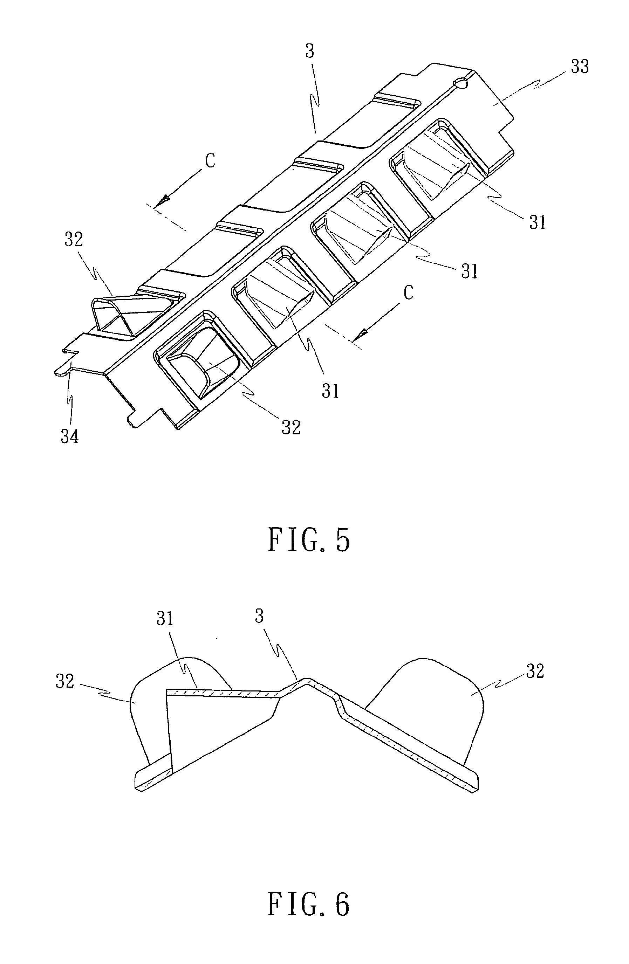

Referring to FIG. 5, FIG. 6 and FIG. 7 again, the third flame tamer 3 in accordance with the third embodiment of the present invention is supported between the front wall 42 and the rear wall 44 of the barbeque burner box 4 near the other side wall 43 (the right side of the barbeque burner box 4), having at least one, for example three, first protruding openings 31 arranged in line and extending in a direction toward the right side wall 43 of the barbeque burner box 4 and at least one, for example two, second protruding openings 32 extending in a direction toward the front wall 42.

Referring to FIG. 8, the aforesaid flame tamers 1, 2 and 3 are bridged on the barbeque burner box 4 above the heat sources 5. According to this application example, the heat sources 5 are elongated gas burners (see FIG. 9) controllable by respective burner control knobs 7. When the heat sources 5 are activated, heat energy is transferred to the flame tamers 1, 2 and 3 and evenly distributed through the whole area of the barbeque grill 6. At the same time, the protruding openings 11, 12, 21, 31 and 32 of the flame tamers 1, 2 and 3 guide part of the heat energy toward the border area of the barbeque burner box 4 so that heat energy is evenly distributed throughout the whole area of the barbeque grill 6 to cook food thoroughly, thus achieving high cooking efficiency and preventing the food from being overcooked or undercooked.

Each of the flame tamers 1, 2 and 3 has a plate body with a double-beveled configuration. Each of the protruding openings (11, 12, 21, 31 or 32) comprises an opening on the plate body and a chute protruding over the opening in a certain direction for guiding the hot air flowing through the opening. Except the protruding openings 11, 12, 21, 31 or 32, the plate body forming each of the flame tamers is an enclosed surface. To reinforce the structural strength and heat transfer effect, the flame tamers 1, 2 and 3 preferably have a concave convex surface configuration. The flame tamer 1 further has a front extension portion 14 and a rear extension portion 13 for supporting on the front wall 42 and the rear wall 44 of the barbeque burner box 4 respectively. Similarly, the flame tamer 2 further has a front extension portion 23 and a rear extension portion 22, and the flame tamer 3 further has a front extension portion 34 and a rear extension portion 33, for supporting on the front wall 42 and the rear extension wall 44 respectively.

There is no any special limitation on the configuration of the barbeque burner box 4. The heat sources 5 of the barbeque burner box 4 are not limited to fuel gas. Further, the configurations of the flame tamers 1, 2 and 3 may be changed, however the protruding openings 11, 12, 21, 31 and 32 are requisite structural features. As far as the length, width and material are concerned, they are determined according to actual needs. However, excellent heat distribution is necessary. Further, the shape, opening and elevation angle of the protruding openings 11, 12, 21, 31 and 32 as well as the positioning structure between the flame tamers 1, 2 and 3 and the front wall 42 and the rear wall 44 of the barbeque burner box 4 can be altered.

Although particular embodiments of the invention have been described in detail for purposes of illustration, various modifications and enhancements may be made without departing from the scope of the invention. Accordingly, the invention is not to be limited except as by the appended claims.

## Claims

1. A barbeque burner box (4) with a flame tamer (1,2,3) for bridging on the barbeque burner box (4) above heat sources (5) in said barbeque burner box (4) to distribute heat energy from the heat sources (5) evenly in said barbeque burner box (4), said flame tamer(1,2,3) having at least one protruding opening (11,12,21, 31, 32) extending in direction toward at least one of peripheral walls (41, 42, 43,44) of said barbeque burner box (4),
**characterised in that** the flame tamer (1,2,3) is rectangular:
wherein said flame tamer (1) is bridged on a front wall (42) and a rear wall (44) between a left sidewall(41) and a right sidewall(43) of said barbeque burner box (4) and disposed close to said left sidewall (41), having at least one protruding opening (11) extending in a direction toward said left sidewall (41) and at least one protruding opening (12) extending in a direction toward said front wall (42),
or
wherein said flame tamer (2) is bridged on a front wall (42) and a rear wall (44) of said barbeque burner box (4) and spaced between a left sidewall (41) and a right sidewall (43) of said barbeque burner box (4), having at least one protruding opening (21) extending in a direction toward said front wall (42);
or
wherein said flame tamer (3) is bridged on a front wall (42) and a rear wall (44) between a left sidewall (41) and a right sidewall (43) of said barbeque burner box (4) and disposed close to said right sidewall (43), having at least one protruding opening (31) extending in a direction toward said right sidewall (43) and at least one protruding opening (32) extending in a direction toward said front wall (42).

2. A barbeque burner box as claimed in claim 1, wherein the flame tamer has a plate body with a curved configuration.

3. A barbeque burner box as claimed in claim 1, wherein the flame tamer has an enclosed surface area except where said at least one protruding opening is formed.

4. A barbeque burner box as claimed in claim 1, wherein the flame tamer comprises a plate body with one or more concave or convex surface portions.

5. A barbeque burner box as claimed in claim 1, wherein the flame tamer has a front extension portion (34) and a rear extension portion (33) respectively extending from front and rear ends thereof for bridging on two opposite peripheral walls of said barbeque burner box (4).

6. A barbeque burner box as claimed in claim 1, wherein the arrangement comprises:
a set of flame tamers including a left flame tamer (1), a right flame (3) tamer and at least one middle flame tamer (2), each said flame tamer bridged on the front wall and the rear wall of said barbeque burner box (4) above heat sources (5), and
a barbeque grill (6) in said barbeque burner box (4), wherein:
said left flame tamer (1) is disposed close to the left sidewall(41) of said barbeque burner box (4), having at least one first protruding opening (11) extending in a direction toward the left sidewall of said barbeque burner box (4) and at least one second protruding opening (12) extending in a direction toward the front wall (42) of said barbeque burner box (4);
said right flame tamer (3) is disposed close to the right sidewall (43)of said barbeque burner box (4), having at least one first protruding opening (31) extending in a direction toward the right sidewall of said barbeque burner box (4) and at least one second protruding opening (32) extending in a direction toward the front wall of said barbeque burner box (4); and
said at least one middle flame tamer (2) is set between said left flame tamer (1) and said right flame tamer (3), each said middle flame tamer having at least one first protruding opening disposed (21) at a front end thereof and extending in a direction toward the front wall (42) of said barbeque burner box (4).

## Patentansprüche

1. Eine Grillbox (4) mit einer Flammenführung (1, 2,3) zum Überbrücken der Grillbox (4) oberhalb einer Wärmequelle (5) in der besagten Grillbox (4), um Wärmeenergie von der Wärmequelle (5) gleichmäßig in der besagten Grillbox (4) zu verteilen, die besagte Flammenführung (1, 2,3) weist zumindest eine hervorstehende Öffnung (11,12,21,31,32) auf, die sich in Richtung zumindest einer Außenwand (41,42,43,44) der besagten Grillbox (4) erstreckt,
**dadurch gekennzeichnet, dass** die Flammenführung (1,2,3,) rechtwinklig ist, wobei die besagte Flammenführung (1) eine vordere Wand (42) und eine hintere Wand (44) überbrückt, zwischen einer linken Seitenwand (41) und einer rechten Seitenwand (43) der besagten Grillbox (4), und in der Nähe zu der besagten linken Seitenwand (41) angeordnet ist, zumindest eine hervorstehende Öffnung (11) besitzen, die sich in eine Richtung zu der besagten linken Seitenwand (41) erstreckt, und zumindest eine hervorstehende Öffnung (12) aufweist, die sich in eine Richtung zu der besagten vorderen Wand (42) erstreckt, oder wobei die besagte Flammenführung (2) eine vordere Wand (42) und eine hintere Wand (44) der besagten Grillbox (4) überbrückt und verteilt zwischen einer linken Seitenwand (41) und einer rechten Seitenwand (43) der besagten Grillbox (4) ist, die zumindest eine hervorstehende Öffnung (21) aufweist, die sich in eine Richtung zu der Frontwand (42) erstreckt; oder
wobei die besagte Flammenführung (3) eine vordere Wand (42) und eine hintere Wand (44) überbrückt, zwischen einer linken Seitenwand (41) und einer rechten Seitenwand (43) der besagten Grillbox (4), und in der Nähe zu der rechten Seitenwand (43) angeordnet Ist, die zumindest eine hervorstehende Öffnung (31) aufweist, die sich in eine Richtung zu der rechten Seitenwand (43) erstreckt und zumindest eine hervorstehende Öffnung (32) aufweist, die sich in eine Richtung zu der vorderen Wand (42) erstreckt.

2. Eine Grillbox nach Anspruch 1, wobei die Flammenführung einen blechförmigen Körper aufweist mit einer gebogenen Konfiguration.

3. Eine Grillbox nach Anspruch 1, wobei die Flammenführung einen umschließenden Oberflächenbereich aufweist, ausgenommen an der Ausformung der besagten zumindest einen hervorstechenden Öffnung.

4. Eine Grillbox nach Anspruch 1, wobei die Flammenführung einen biechförmigen Körper umfasst mit einer oder mehreren konkaven oder konvexen Oberflächenbereichen.

5. Eine Grillbox nach Anspruch 1, wobei die Flammenführung jeweils einen vorderen, sich wegerstreckenden Bereich (34) und einen hinteren sich wegerstreckenden Bereich (33) aufweist, die sich jeweils von den vorderen und hinteren Enden davon erstrecken, um zwei gegenüberliegende Außenwände der besagten Grillbox (4) zu überbrücken.

6. Eine Grillbox nach Anspruch 1, wobei die Anordnung umfasst:
einen Satz von Flammenführungen umfassend eine linke Flammenführung (1), eine rechte Flammenführung (3) und zumindest eine mittlere Flammenführung (2), jede der besagten Flammenführung überbrückt die vordere Wand und die hintere Wand der besagten Grillbox (4) oberhalb der Wärmequelle (5), und ein Grilleinheit (6) in der besagten Grillbox (4) wobei:
die besagte linke Flammenführung (1) In der Nähe zu der linken Seitenwand (41) der besagten Grillbox (4) angeordnet ist, die mindestens eine erste hervorstehende Öffnung (11) aufweist, die sich in eine Richtung zu der linken Seitenwand der besagten Grillbox (4) erstreckt und zumindest eine zweite hervorstehende Öffnung (12), die sich in eine Richtung zu der vorderen Wand (42) der besagten Grillbox (4) erstreckt;
die besagte rechte Flammenführung (3) ist in der Nähe zu der rechten Seitenwand (43) der besagten Grillbox (4) angeordnet, die zumindest eine erste hervorstehende Öffnung (31) aufweist, die sich in eine Richtung zu der rechten Seitenwand der besagten Grillbox (4) erstreckt und zumindest einen zweite hervorstehende Öffnung (32) die sich in eine Richtung zu der vorderen Wand der besagten Grillbox (4) erstreckt;
und die besagte zumindest eine mittlere Flammenführung (2) ist zwischen die besagte linke Flammenfilhrung (1) und die besagte rechte Flammenführung (3) gesetzt, jede der besagten mittleren Flammenführungen hat zumindest eine erste hervorstehende Öffnung (21) die an einem vorderen Ende davon angeordnet sind und sich in eine Richtung zu der Vorderwand (42) der besagten Grillbox (40) erstrecken.

## Revendications

1. Une boîte de brûleur de barbecue (4) dotée d'un réducteur de flammes (1, 2, 3) destiné au pontage de la boîte de brûleur de barbecue (4) au dessus des sources de chaleur (5) au sein de ladite boîte de brûleur de barbecue (4) pour distribuer uniformément l'énergie thermique des sources de chaleur (5) dans ladite boîte de brûleur de barbecue (4), ledit réducteur de flammes (1, 2, 3) ayant au moins une ouverture saillante (11, 12, 21, 31, 32) s'étendant vers au moins une des parois périphériques (41, 42, 43, 44) de la boite de brûleur de barbecue (4),
**caractérisée en ce que** le réducteur de flammes (1, 2, 3) est rectangulaire ; dans lequel ledit réducteur de flammes (1) est ponté sur une paroi avant (42) et une paroi arrière (44) entre une paroi latérale gauche (41) et une paroi latérale droite (43) de ladite boite de brûleur de barbecue (4) et disposée proche de ladite paroi latérale gauche (41), ayant au moins une ouverture saillante (11) s'étendant vers ladite paroi latérale gauche (41) et au moins une ouverture saillante (12) s'étendant vers ladite paroi avant (42) ;
ou
dans laquelle ledit réducteur de flammes (2) est ponté sur une paroi avant (42) et une paroi arrière (44) de ladite boîte de brûleur de barbecue (4) et disposée entre une paroi latérale gauche (41) et une paroi latérale droite (43) de ladite boite de brûleur de barbecue (4), ayant au moins une ouverture saillante (21) s'étendant vers ladite paroi avant (42);
ou
dans laquelle ledit réducteur de flammes (3) est ponté sur une paroi avant (42) et une paroi arrière (44) entre une paroi latérale gauche (41) et une paroi latérale droite (43) de ladite boîte de brûleur de barbecue (4), et disposée proche de ladite paroi latérale droite (43), ayant au moins une ouverture saillante (31) s'étendant vers ladite paroi latérale droite (43) et au moins une ouverture saillante (32) s'étendant vers ladite paroi avant (42).

2. Une boîte de brûleur de barbecue (4) telle que revendiquée dans la revendication 1, dans laquelle le réducteur de flammes présente un corps plat courbé.

3. Une boîte de brûleur de barbecue (4) telle que revendiquée dans la revendication 1, dans laquelle le réducteur de flammes présente une surface intérieure à l'exception de là où se situe au moins une ouverture.

4. Une boîte de brûleur de barbecue (4) telle que revendiquée dans la revendication 1, dans laquelle le réducteur de flammes comporte un corps plat ayant une ou plusieurs parties concave(s) ou convexe(s).

5. Une boîte de brûleur de barbecue (4) telle que revendiquée dans la revendication 1, dans laquelle le réducteur de flammes dispose d'une extension vers l'avant (34) et une extension arrière (33) s'étendant respectivement des extrémités avant et arrières pour le pontage de deux parois périphériques opposées de ladite boite de brûleur de barbecue (4).

6. Une boîte de brûleur de barbecue telle que revendiquée dans la revendication 1, ayant une disposition comportant :
un jeu de réducteur de flammes comportant un premier réducteur de flammes gauche (1), un réducteur de flammes droit (3) et au moins un réducteur de flammes intermédiaire, chacun desdits réducteurs de flammes étant pontés sur la paroi avant et la paroi arrière de ladite boîte de brûleur de barbecue (4) au dessus des sources de chaleurs (5), et
un grill de barbecue (6) à l'intérieur de ladite boîte de brûleur de barbecue (4), dans lequel :
ledit réducteur de flammes gauche (1) est disposé proche de la paroi gauche (41) de ladite boîte de brûleur de barbecue (4), ayant au moins une première ouverture saillante (11) s'étendant vers la paroi latérale gauche de ladite boîte de boite de brûleur de barbecue (4) et au moins une seconde ouverture saillante (12) s'étendant vers la paroi avant (42) de ladite boîte de boîte de brûleur de barbecue (4) ;
ledit réducteur de flammes droit (3) est disposé proche de la paroi droite (43) de ladite boîte de brûleur de barbecue (4), ayant au moins une première ouverture saillante (31) s'étendant vers la paroi latérale droite de ladite boîte de boîte de brûleur de barbecue (4) et au moins une seconde ouverture saillante (32) s'étendant vers la paroi avant (42) de ladite boîte de boîte de brûleur de barbecue (4) ;
le ou lesdits réducteur(s) de flammes intermédiaire(s) (1) est/sont disposé(s) entre ledit réducteur de flammes gauche (1) et ledit réducteur de flammes droit (3), chacun desdits réducteurs de flammes intermédiaires ayant au moins une première ouverture saillante (21) disposée a une extrémité avant et s'étendant vers la paroi avant (42) de ladite boite de boîte de brûleur de barbecue (4) ;
